# EUROPÄISCHE PATENTSCHRIFT

(11) **EP 0 311 765 B1**
(45) Veröffentlichungstag und Bekanntmachung des Hinweises auf die Patenterteilung: **26.05.1993**
(21) Anmeldenummer: 88112777.3
(22) Anmeldetag: 05.08.1988
(51) Int. Cl.: B01D 19/02, B05B 1/32

(54) **Vorrichtung zum Zerstören von Schaum**
Apparatus for destruction of foam
Dispositif pour combattre la mousse

(30) Priorität: 16.10.1987 DE 3735080
(43) Veröffentlichungstag der Anmeldung: 19.04.1989
(73) Patentinhaber: DEUTSCHE BABCOCK- BORSIG AKTIENGESELLSCHAFT, 13507 Berlin (DE)
(72) Erfinder: Ordelheide, Rolf, D-1000 Berlin 27 (DE); Turgay, Hüdai, D-1000 Berlin 20 (DE)
(74) Vertreter: Müller, Jürgen, Dipl.-Ing.

(56) Entgegenhaltungen:
- EP-A- 0 184 689
- WO-A-87/05537
- US-A- 2 948 351

## Beschreibung

Die Erfindung betrifft eine Vorrichtung zum Zerstören von Schaum, der sich an der Oberfläche einer Abwasser-Belebtschlamm-Suspension in einem Reaktionsgefäß bildet.

Aus der US-A-2 948 351 ist eine Vorrichtung zur Zerstörung von Schaum in einer überschäumenden Flüssigkeit bekannt, die in einem Reaktionsgefäß einem aeroben Fermentationsprozeß unterworfen ist. Die Vorrichtung besteht aus einer Düse, die einen zylindrischen Querschnitt von nicht veränderbarer Größe aufweist und die über eine Leitung mit dem Reaktionsgefäß verbunden ist und in eine Kammer mündet. Über die Leitung tritt die überschäumende Flüssigkeit in die Düse ein und erfährt in der Düse eine Geschwindigkeitserhöhung, durch die der Schaum zerstört wird. Die von dem Schaum befreite Flüssigkeit fließt aus der Kammer über eine Rückführungsleitung in das Reaktionsgefäß zurück.

In der EP-A-0 184 689 ist eine Vorrichtung zur thermischen Entgasung einer Flüssigkeit beschrieben, die mit Hilfe von Dampf auf Verdampfungstemperatur erwärmt wird. Die Vorrichtung enthält Düsen von veränderbarem Querschnitt, in denen eine vollkommene Emulsion aus Flüssigkeit und Dampf erzeugt wird. Diese Emulsion gestattet ein Austreiben der in der Flüssigkeit gelösten Gase.

Ein nach dem Hubstrahl-Prinzip arbeitender Reaktor zur Behandlung von Abwasser mit Belebtschlamm ist aus der DE-A-3 151 153 bekannt. Die in das Reaktionsgefäß eingeleitete Luft, deren Sauerstoff zur bakteriellen Reaktion benötigt wird, wird mit Hilfe von Lochscheiben dispergiert. Durch dieses Bauprinzip erhält man ein vollkommen durchmischtes und totraumfreies Reaktionsvolumen. Aufgrund seiner besonderen Ausbildung erzeugt der Reaktor eine stark schäumende Suspension, deren Schaum- und Entgasungsprobleme mit den bisher bekannten Maßnahmen nicht ausreichend beherrschbar waren, so daß der Reaktor in seiner Leistungsfähigkeit begrenzt war. Der in der Suspension enthaltene Schaum behindert das Absetzen des Belebtschlammes in dem dem Reaktionsgefäß nachgeschalteten Absetzgefäß.

Der Erfindung liegt die Aufgabe zugrunde, die Bildung von Schaum in einer mit Belebtschlamm behandelten Abwasser-Suspension vor deren Weiterbehandlung außerhalb des Reaktionsgefäßes auch bei starker Neigung zur Schaumbildung zu unterbinden.

Diese Aufgabe wird durch die Merkmale des Patentanspruches 1 gelöst. Vorteilhafte Ausgesstaltungen der Erfindung sind in den abhängigen Ansprüchen angegeben.

Bei der erfindungsgemäßen Vorrichtung wird die kontinuierlich aus dem Reaktionsgefäß austretende Abwasser-Belebtschlamm-Suspension über eine Abrißkante durch den Austrittsschlitz von verstellbarer Höhe gezwängt. Dabei werden die Gasbläschen des Schaumes aufgerissen, und die Suspension wird in eine Gasphase und eine Flüssigkeitsphase zerlegt. Bevor sich große Schaumvolumina bilden können, werden bereits kleinste Bläschen an der Abrißkante zum Zerplatzen gebracht. Eine Vergrößerung der Schaumblasen wird damit bereits am Entstehungsort unterbunden.

Mehrere Ausführungsbeispiele der Erfindung sind in der Zeichnung dargestellt und werden im folgenden näher erläutert.

Es zeigen:

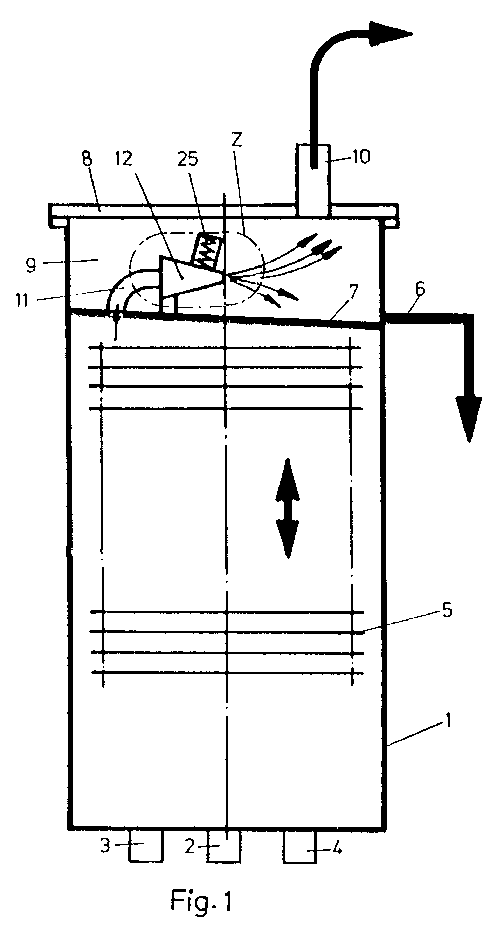

- Fig. 1: ein Reaktionsgefäß mit einer Vorrichtung zur Zerstörung des Schaumes,
- Fig. 2: ein Reaktionsgefäß mit einer anderen Vorrichtung zur Zerstörung des Schaumes

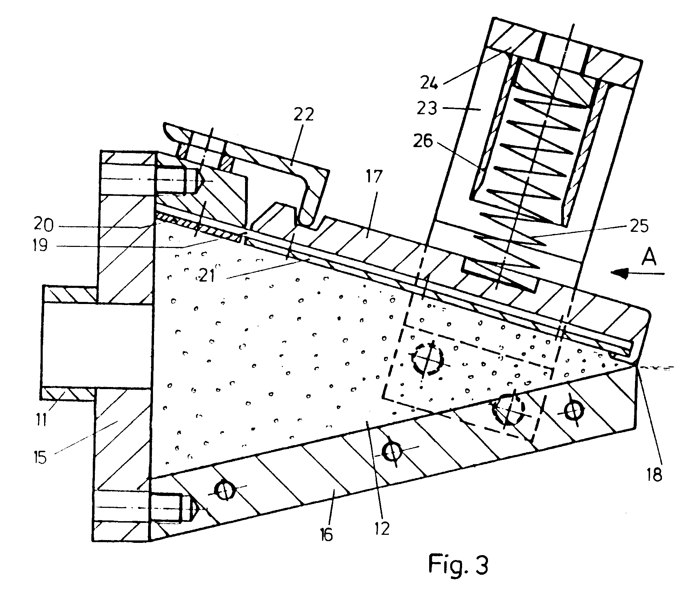

- Fig. 3: die Einzelheit Z gemäß Fig. 1 oder 2 im Längsschnitt und

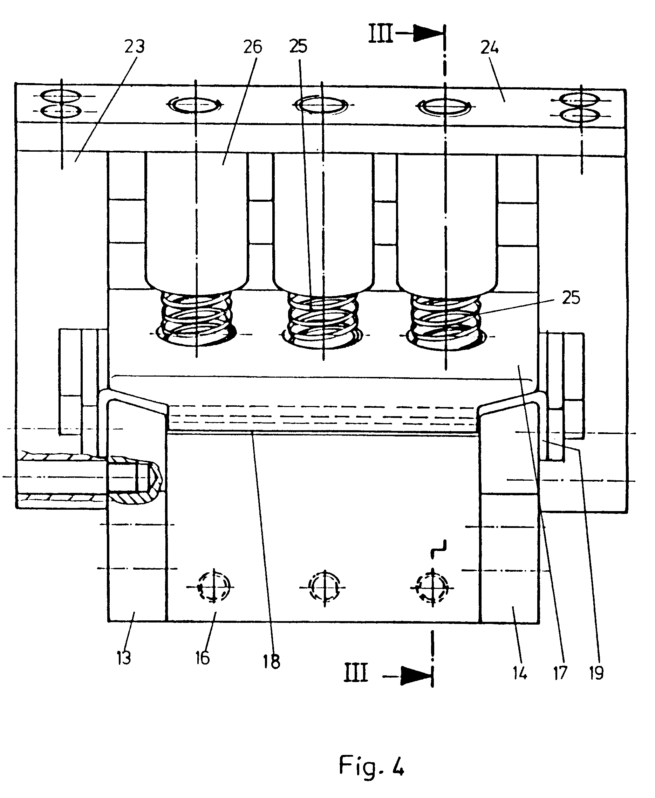

- Fig. 4: die Ansicht zu Fig. 3 in Blickrichtung A.

Ein Hubstrahl-Reaktor zur Behandlung von Abwasser mit Hilfe von Belebtschlamm enthält ein Reaktionsgefäß 1, dessen unterer Teil mit einem Zuführungsstutzen 2 für Abwasser und mit einem Zuführungsstutzen 3 für ein Belebtschlammkonzentrat versehen ist. Eine Luftleitung 4 mündet ebenfalls in den unteren Teil des Reaktionsgefäßes 1 ein.

Innerhalb des Reaktionsgefäßes 1 ist ein Paket aus Lochscheiben 5 angeordnet, die über ein nicht gezeigtes Hubwerk heb- und senkbar sind. Beim Durchtritt durch die Bohrungen in den Lochscheiben während der Hub- und Senkbewegung werden das Abwasser, der Belebtschlamm und die Luft intensiv miteinander gemischt. Die so behandelte Suspension wird kontinuierlich über einen Abfluß 6 abgeführt.

Das Reaktionsgefäß 1 ist im oberen Teil durch eine Platte 7 geschlossen, die mit einer oder mehreren Durchtrittsöffnungen versehen ist. Oberhalb der Platte 7 ist ein Deckel 8 angeordnet, der zusammen mit der Platte 7 und dem oberen Teil der Wandung des Reaktionsgefäßes 1 eine Kammer 9 begrenzt. Die Kammer 9 ist mit dem Abfluß 6 für die behandelte Suspension und mit einer Austrittsleitung 10 für die Abluft versehen. Die Durchtrittsöffnung in der Platte 7 ist über eine Leitung 11 mit einer innerhalb der Kammer 9 angeordneten Düse 12 verbunden, die der Zerstörung des sich an der Oberfläche der Suspension bildenden Schaumes dient.

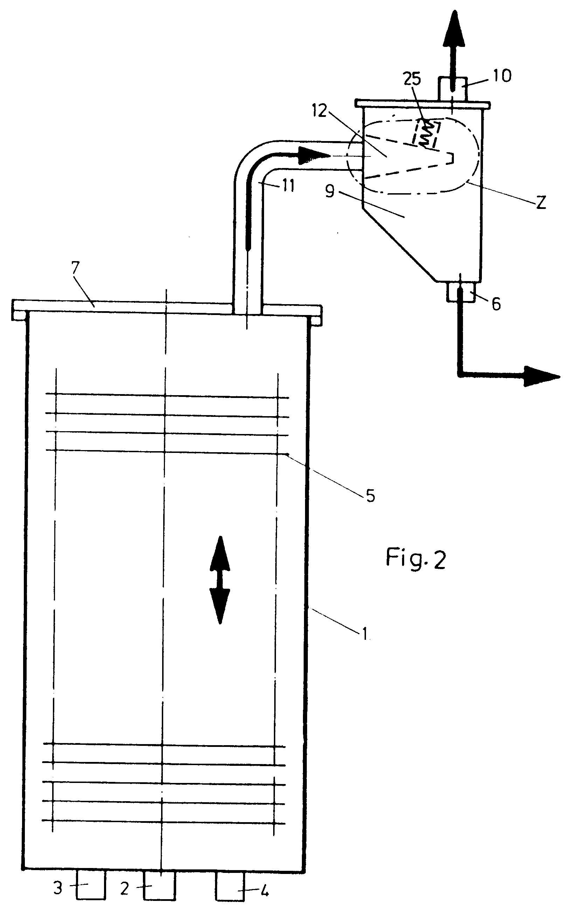

Nach Fig. 2 kann die Kammer 9 zur besseren Zugänglichkeit der Düse 12 außerhalb des Reaktionsgefäßes 1 angeordnet sein. In diesem Fall ist das Reaktionsgefäß 1 durch die Platte 7 verschlossen und über die extern verlegte Leitung 11 mit der in der Kammer 9 angeordneten Düse 12 verbunden. An die außerhalb des Reaktionsgefäßes 1 liegende Kammer 9 sind der Abfluß 6 und die Austrittsleitung 10 angeschlossen.

Die Düse 12 enthält zwei Seitenwände 13, 14, eine von der Leitung 11 durchdrungene Rückwand 15 und zwei unter einem Winkel aufeinander zulaufende Wände 16, 17. Diese Wände 16, 17 bilden Leitzungen zur Führung der Suspension zu einem Austrittsschlitz 18, der durch die Außenkante der Wände 16, 17 begrenzt ist.

Die untere schräge Wand 16 ist fest mit den Seitenwänden 13, 14 und der Rückwand 15 verbunden und bildet zusammen mit diesen den feststehenden Teil der Düse 12. Die obere schräge Wand 17 ist über eine Membran 19 mit dem feststehenden Teil der Düse 12 verbunden. Die Membran 19 ist mit Hilfe von Tragplatten 20, 21 an der beweglichen Wand 17 und dem feststehenden Teil der Düse 12 befestigt. Ein feststehenden Teil der Düse gehaltener, abgewinkelter Bügel 22 dient als Drehlager für die bewegliche Wand 17.

An den Seitenwänden 13, 14 ist eine Halterung 23 befestigt, die mit einem Ouerträger 24 die bewegliche Wand 17 übergreift. Federn 25, die von Führungen 26 umschlossen sind, liegen an dem Querträger 24 der Halterung 23 und an der beweglichen Wand 17 an. Die bewegliche Wand 17 ist damit federnd am feststehenden Teil der Düse 12 gestützt.

Die kontinuierlich aus dem Reaktionsgefäß 1 in die Düse 12 eintretende Suspension wird durch den Austrittsschlitz 18 der Düse 12 herausgepreßt. Der Transport der Suspension und die erforderliche Geschwindigkeitserhöhung wird durch eine geringfügige Erhöhung des Druckes in dem Reaktionsgefäß 1 erreicht. Aufgebaut wird dieser Druck durch die Verkleinerung des Austrittsschlitzes 18 der Düse 12. Beim Durchtritt durch den Austrittsschlitz 18 werden die sich bildenden Gasbläschen zerrissen. Die Suspension wird innerhalb der Kammer 9 in eine entgaste Flüssigkeitsphase, die über den Abfluß 6 abgeführt wird, und in eine Gasphase getrennt, die über die Austrittsleitung 10 entweicht. Eine auf diese Weise erzeugte, einwandfreie Entgasung und eine unterbundene Schaumbildung sind die Voraussetzung für ein gutes Absetzverhalten der in der Suspension enthaltenen Bakterienagglomerate in dem Reaktionsgefäß 1 nachgeschalteten, nicht gezeigten Absetzgefäßen. Mit Hilfe der Düse 12 kann in dem Reaktionsgefäß 1 ein Druck eingehalten werden, wodurch der Ablauf der bakteriellen Reaktion begünstigt und der Energieeintrag für die Bewegung der Lochscheiben 5 erniedrigt wird. Über eine Änderung der durch die Federn 25 bewirkten Anpreßkraft kann der Druck der Düse 12 variiert werden. Damit wird ein unmittelbares Anpassen und Justieren des jeweils erforderlichen Entgasungsvorganges möglich.

## Patentansprüche

1. Vorrichtung zur Zerstörung von Schaum, der sich an der Oberfläche einer Abwasser-Belebtschlamm-Suspension in einem Reaktionsgefäß (1) bildet, in dem Lochscheiben (5) heb- und senkbar angeordnet sind, wobei das Reaktionsgefäß (1) mit einem Zufluß (2) für die unbehandelte Suspension versehen und durch eine mindestens eine Durchtrittsöffnung für den Durchtritt der behandelten Suspension aufweisende Platte (7) verschlossen ist, wobei die Durchtrittsöffnung mit einer Düse (12) verbunden ist, die innerhalb einer Kammer (9) angeordnet ist, wobei die Kammer (9) mit einer Austrittsleitung (10) für Abluft und mit einem Ausfluß (6) für die behandelte und entgaste Suspension versehen ist, wobei die Düse (12) zwei unter einem Winkel aufeinander zulaufende Wände (16, 17) aufweist, deren einander am nächsten kommenden Außenkanten einen Austrittsschlitz (18) begrenzen und wobei eine der Wände (17) relativ zu der anderen Wand (16) beweglich angeordnet ist.

2. Vorrichtung nach Anspruch 1, dadurch gekennzeichnet, daß die bewegliche Wand (17) mit dem feststehenden Teil der Düse (12) über eine Membran (19) verbunden ist.

3. Vorrichtung nach Anspruch 2, dadurch gekennzeichnet, daß die bewegliche Wand (17) über Federn (25) auf dem feststehenden Teil der Düse (12) abgestützt ist.

## Claims

1. Device for destroying foam which forms at the surface of a sewage activated sludge slurry in a reaction vessel (1) in which perforated plates (5) are raised and lowered, wherein the reaction vessel (1) is provided with an admission (2) for the untreated slurry and is closed by a plate (7) with at least one through hole for the passage of the treated slurry, wherein the through hole is connected with a nozzle (12) which is located inside a chamber (9), wherein the chamber (9) is provided with an outlet line (10) for waste air and with a discharge (6) for the treated and deaerated slurry, wherein the nozzle (12) shows two walls (16, 17) matching under an angle and whose respective closest outside edges limit an outlet slot (18), and wherein one of the walls (17) is moving relative to the other wall (16).

2. Device according to claim 1 characterized by the mobile wall (17) which is connected with the fixed part of the nozzle (12) through diaphragm (19).

3. Device according to claim 2 characterized by the mobile wall (17) which rests on the fixed part of the nozzle (12) through springs (25).

## Revendications

1. Dispositif pour la destruction d'écume se formant sur la surface d'une suspension d'eaux usées et de boues activées dans un réacteur (1) dans lequel sont disposées des plaques perforées (5) pouvant monter et descendre, le réacteur (1) étant pourvu d'une admission (2) pour la suspension non traitée et étant fermé par une plaque (7) avec au moins une ouverture pour le passage de la suspension traitée, cette ouverture de passage étant raccordée à une buse (12) placée dans une chambre (9) qui de sa part est équipée d'une conduite de sortie d'air d'évacuation (10) et d'une sortie (6) pour la suspension traitée et dégazée, la buse (12) ayant deux parois (16, 17) se rencontrant sous un angle et dont les bords extérieurs qui se sont le plus proches l'un de l'autre délimitent une fente de sortie (18), une des parois (17) étant disposée de façon mobile par rapport à l'autre (18).

2. Dispositif conforme à la revendication 1, caractérisé en ce que la paroi mobile (17) est reliée par un diaphragme (19) à la partie fixe de la buse (12).

3. Dispositif conforme à la revendication 2, caractérisé en ce que la paroi mobile (17) s'appuie sur la partie fixe de la buse (12) moyennant des ressorts (25).
